Europäisches Patentamt

European Patent Office

Office européen des brevets

(19)

(11) Veröffentlichungsnummer: **0 211 249**
**B1**

(12) **EUROPÄISCHE PATENTSCHRIFT**

(45) Veröffentlichungstag der Patentschrift:
**10.05.89**

(21) Anmeldenummer: **86109183.3**

(22) Anmeldetag: **04.07.86**

(51) Int. Cl.⁴: **C08J 5/04, C08L 23/12**

(54) Verbundwerkstoff aus glasmattenverstärktem Polypropylen.

(30) Priorität: **09.07.85 DE 3524396**

(43) Veröffentlichungstag der Anmeldung:
**25.02.87 Patentblatt 87/9**

(45) Bekanntmachung des Hinweises auf die Patenterteilung:
**10.05.89 Patentblatt 89/19**

(84) Benannte Vertragsstaaten:
**BE CH DE FR GB IT LI SE**

(56) Entgegenhaltungen:
**US-A- 3 862 265**

**KUNSTSTOFFE, Band 72, Nr. 6, 1982, Seiten 341-347, Hanser Verlag, München, DE; E. SEILER et al.: "Glasmattenverstärkte Thermoplaste"
H.P. FRANK: "Polypropylene", 1968, Seiten 92-93, Gordon and Breach Science Publishers, New York, US**

(73) Patentinhaber: **BASF Aktiengesellschaft,
Carl-Bosch-Strasse 38, D-6700 Ludwigshafen(DE)**

(72) Erfinder: **Nissen, Dietmar, Dr., Ziegelhäuser Landstrasse 31, D-6900 Heidelberg(DE)**
Erfinder: **Schoene, Werner, Dr., Wormser Strasse 28, D-6905 Schriesheim(DE)**
Erfinder: **Welz, Martin, Kaiserslauterer Strasse 231, D-6702 Bad Dürkheim(DE)**
Erfinder: **Gruber, Wolfgang, Dr., Lorscher Ring 2b, D-6710 Frankenthal(DE)**
Erfinder: **Laun, Martin, Dr., Dürerstrasse 22, D-6700 Ludwigshafen(DE)**
Erfinder: **Vogel, Helmut, Helmkemper-Ort 18, D-4550 Bramsche 8(DE)**
Erfinder: **Wahl, Ludwig, Edith-Stein-Strasse 14, D-6707 Schifferstadt(DE)**
Erfinder: **Ball, Wolfgang, Dr., 0 6,9, D-6800 Mannheim 1(DE)**

## Beschreibung

Die Erfindung betrifft Verbundwerkstoffe mit günstigem Fließverhalten aus glasmattenverstärktem niedermolekularem Polypropylen.

In der DE-B 2 312 816 ist ein Verfahren zur Herstellung von Halbzeug aus glasmattenverstärkten thermoplastischen Kunststoffen beschrieben, wobei eine Schmelze des Thermoplasten zwischen vorgewärmte Glasfasermatten extrudiert wird. Dieses Verfahren ist mit leichtfließenden, polaren Thermoplasten, wie Polyamiden oder Polyestern verhältnismäßig einfach durchzuführen, bei den unpolaren Polyolefinen, insbesondere bei Polypropylen ist eine gute Tränkung und Benetzung der Glasmatten mit der Thermoplastschmelze jedoch schwierig.

Man hat daher versucht, durch Verwendung eines gutfließenden Polypropylen mit niedrigem Molekulargewicht die Tränkung zu verbessern. Ein entsprechend hergestelltes, auf dem Markt befindliches Produkt weist jedoch ein ungünstiges Fließverhalten auf. Bei der Verarbeitung des Halbzeugs durch Verpressen bei Temperaturen oberhalb des Schmelzpunktes des Polypropylens (bei Schergeschwindigkeiten um $10^3$ [s$^{-1}$] ist die Schmelzeviskosität des Polypropylens so niedrig, daß eine Entmischung zwischen dem leicht fließenden Kunststoff und den schwerer fließenden Glasfasern eintreten kann. Dies ist besonders kritisch bei der Herstellung von komplizierten Formteilen, die z.B. Rippen aufweisen, wo die Extremstellen einen zu geringen Glasfasergehalt bekommen und daher riß- und bruchanfällig werden.

Der Erfindung lag daher die Aufgabe zugrunde, Verbundwerkstoffe auf Basis von Glasmatten und Polypropylen zu entwickeln, die sich einerseits problemlos durch Tränken der Glasmatten mit dem Thermoplasten herstellen lassen, die sich aber andererseits ohne Entmischung auch zu komplizierten Formteilen verarbeitet werden können.

Es wurde gefunden, daß diese Aufgabe gelöst wird, wenn man ein niedermolekulares Polypropylen mit enger Molmassenverteilung entsprechend einer Schmelzenachgiebigkeit $J_e°$ zwischen 0,4 . $10^{-4}$ und 4,0 . $10^{-4}$ [Pa$^{-1}$], vorzugsweise zwischen 0,5 . $10^{-4}$ und 3,0 . $10^{-4}$ [Pa$^{-1}$] bei einer Temperatur von 190°C einsetzt.

Die Schmelzenachgiebigkeit $J_e°$ ist die auf die Schubspannung bezogene elastische Scherdeformation bei kleinen Schergeschwindigkeiten. Sie wird in einem modifizierten Weissenberg-Rheogoniometer gemessen, das z.B. von J. Meißner in J. of Appl. Polym. Sci. 16, 2877 (1972) oder in Rheol. Acta 14, 201 (1975) beschrieben ist. Dazu wird die Schmelze in einem Kegel-Platte-Spalt mit 4° Öffnungswinkel oszillatorisch mit Amplituden $\gamma < 0,3$ und verschiedenen Kreisfrequenzen $\omega = 2\pi f$ (f = Frequenz) geschert. Aus der sich ergebenden oszillatorischen Schubspannung werden nach einem von J.D. Ferry in "Viscoelastic Properties of Polymers", 3rd edition, Wiley, New York 1980, Seiten 11 ff. beschriebenen Verfahren der Verlustmodul G" und der Speichermodul G' bestimmt. Nach der Cox-Merz-Beziehung (W.P. Cox" und E.H. Merz, J. of Polym. Sci. 28, 619 (1958) ist der Betrag der dynamischen Viskosität

$$|\eta*(\omega)| = \frac{1}{\omega} \sqrt{G'_{(\omega)}{}^2 + G''_{(\omega)}{}^2}$$

gleich der Viskosität der Schmelze bei der Schergeschwindigkeit $\gamma = \omega$ zu setzen. Die Schmelzenachgiebigkeit $J_e°$ wird dann berechnet nach

$$J_e^0 = \lim_{\omega \to 0} \frac{G'(\omega)}{G''(\omega)} = \frac{1}{\eta_0^2} \lim_{\omega \to 0} \frac{G'}{\omega^2}$$

(siehe A. Zosel, Rheol. Acta 10, 215 (1971) und B.D. Coleman und H. Marcowitz, J. of Appl. Phys. 35, 1 (1964)), wobei $\eta_0$ der von der Schergeschwindigkeit bzw. der Kreisfrequenz unabhängige Wert der Viskosität bei kleinen Schergeschwindigkeiten ist.

Das Polypropylen soll vorzugsweise ein mittleres Molekulargewicht zwischen 110.000 und 220.000, insbesondere zwischen 130.000 und 180.000 (Gewichts-Mittel) aufweisen. Das Molekulargewicht wird dabei durch Gelpermeationsgaschromatographie (ASTM D 3593-80 bzw. Polymer Letters, Juni 1971, 9, Seiten 401–411) ermittelt.

Das Polypropylen soll bei niedrigen Schergeschwindigkeiten eine verhältnismäßig geringe Schmelzviskosität $\eta_1$, vorzugsweise zwischen 80 und 500, insbesondere zwischen 100 und 400 [Pas.s] bei einer Schergeschwindigkeit von $10^{-1}$ [s$^{-1}$], aufweisen, gemessen bei 190°C mit dem oben beschriebenen Rheogoniometer. Mit einem derart gut fließenden Polypropylen ist eine Tränkung von Glasfasermatten problemlos möglich.

Bei hohen Schergeschwindigkeiten soll die Schmelzeviskosität verhältnismäßig hoch sein, so daß beim Verpressen des Verbundwerkstoffs auch bei langen Fließwegen keine wesentliche Entmischung von Glasfasern und Kunststoffmatrix auftritt. Bevorzugt soll die Schmelzeviskosität $\eta_2$ bei einer Scherge-

schwindigkeit von $10^3$ [$s^{-1}$] zwischen 40 und 100, insbesondere zwischen 45 und 90 [Pa.s] liegen. Hier wird die Schmelzeviskosität in einem Hochdruck-Kapillarviskosimeter bei 190° mit einer Düse von r = 0,6 mm nach H.M. Laun, Rheol. Acta 18, 478 (1979) bestimmt.

Niedermolekulares Polypropylen mit enger Molmassenverteilung ist bekannt. Es kann – wie z.B. in H.P. Frank, Polypropylene, Gordon and Breach 1968, Seiten 92/93 beschrieben – nach verschiedenen Methoden hergestellt werden, z.B. durch Abbau mit Hilfe von Peroxiden oder mit Sauerstoff, durch thermischen Abbau oder durch mechanischen Abbau mittels Scherenergie. Neben Homopolypropylen kommen auch Copolymere, z.B. mit untergeordneten Mengen Ethylen, in Frage.

Die Verbundwerkstoffe enthalten eine oder mehrere Glasmatten, wobei der Glasgehalt 10 bis 50, vorzugsweise 25 bis 45 Gew.-% beträgt. Es werden bevorzugt gebundene und genadelte Matten verwendet.

Die Matten können aus wirr verlegten Endlosfasern, aus geschnittenen Fasern in ungerichteter Verteilung oder ganz bzw. teilweise aus gerichteten endlosen oder geschnittenen Fasern gebildet sein. Bevorzugt sind Glasfasermatten aus endlosen ungerichteten Glasfasern mit einem Flächengewicht von 250 bis 1200 g.m$^{-2}$. Die Verfestigung der Matten kann mittels polymerer Bindemittel oder durch mechanische Verbindungstechniken, z.B. Nadeln, Vernähen oder Versteppen erfolgt sein. Beim Nadeln werden die Glasfasern teilweise zertrümmert, so daß neben sehr langen, unbeschädigten Fasern auch kurze Fasern vorliegen. Die mittlere Faserlänge beträgt vorzugsweise 10 bis 80 mm.

Neben den Glasfasern können die Verbundwerkstoffe noch übliche Zusatzstoffe, wie Füllstoffe, Stabilisatoren, Pigmente, Flammschutzmittel, Antistatika und Fließhilfsmittel enthalten.

Die Herstellung der erfindungsgemäßen Verbundwerkstoffe erfolgt vorzugsweise durch Aufschmelzen des Thermoplasten in einem Extruder, Auspressen aus einer Breitschlitzdüse und Zusammenführen mit den gegebenenfalls vorgeheizten Glasfasermatten.

Das erhaltene flächige Halbzeug, das vorzugsweise eine Dicke von 0,8 bis 8 mm aufweist, ist vollständig durchtränkt, die Faserbündel sind in Einzelfilamente aufgeschlossen. Es ist problemlos zu Fertigteilen verarbeitbar durch Aufheizen auf Temperaturen oberhalb des Schmelzbereichs des Thermoplasten und Verpressen in einer verhältnismäßig kalten (30 bis 90°C) Form. Dabei fließt der Verbundwerkstoff auch in Extremstellen der Form und füllt z.B. Rippen und Verdickungen voll aus, ohne daß eine schädliche Entmischung von Thermoplast und Glasfasern eintritt.

Die Verbundwerkstoffe können zur Herstellung von Kraftfahrzeugteilen, wie Sitzschalen, Batterieträger, Schallkapseln oder Windleitblechen sowie von Kofferschalen und Sonnenkollektoren verwendet werden.

Beispiele:

In einen Zweiwellenextruder werden in einem Einfülltrichter 100 Gewichtsteile Polypropylen (s. Tabelle) zugegeben und bei Gehäusetemperaturen ansteigend von 160 bis 180°C aufgeschmolzen. Durch einen Seitenextruder werden 3 Gewichtsteile eines Stabilisator/Ruß-batches zugegeben und homogen in der Schmelze verteilt. Aus einer Breitschlitzdüse wird die Polypropylenschmelze zwischen zwei parallel laufende genadelte Glasfasermatten ausgepreßt. In einer beheizten Druckzone einer Doppelbandpresse werden die Matten mit der Schmelze getränkt und anschließend wird der Verbund unter Druck abgekühlt.

Aus dem 3 mm dicken Halbzeug (Glasfasergehalt 39 Gew.-%) werden runde Testkörper mit verschiedenen Rippen und Verdickungen gepreßt, indem rechteckige Zuschnitte in einem Ofen auf 220°C aufgeheizt und in einer 80°C warmen Form unter einem Druck von 150 bar gepreßt werden.

Tabelle

| Polypropylen | Molekulargewicht $M_w$ | Schmelzeviskosität [Pa . s] | | Schmelzenachgiebigkeit $J_e^0$ [$Pa^{-1}$] |
|---|---|---|---|---|
| | | bei $j = 10^{-1}$ | bei $j = 10^3$ | |
| A. nicht abgebaut | 650 000 | 7500 | 120 | $25{,}0 \cdot 10^{-4}$ |
| B. mit Regler | 220 000 | 150 | 27 | $13 \cdot 10^{-4}$ |
| polymerisiert | 260 000 | 400 | 37 | $15 \cdot 10^{-4}$ |
| C. abgebaut | 150 000 | 105 | 41 | $0{,}6 \cdot 10^{-4}$ |
| | 160 000 | 190 | 54 | $0{,}9 \cdot 10^{-4}$ |
| | 170 000 | 350 | 67 | $1{,}1 \cdot 10^{-4}$ |
| | 180 000 | 470 | 75 | $1{,}5 \cdot 10^{-4}$ |
| | 195 000 | 550 | 80 | $1{,}7 \cdot 10^{-4}$ |

Mit dem nicht abgebauten, hochmolekularen Polypropylen A erfolgt keine vollständige Tränkung. Die Halbzeugoberfläche weist zahlreiche nicht getränkte Faserbündel auf, bei dem gepreßten Testkörper zeichnet sich die Kontur des Zuschnitts stark ab.

Bei dem mit Hilfe von Reglern direkt polymerisierten Polypropylen B mit breiter Molmasseverteilung fließen die Glasfasern nicht vollständig in die Spitzen der Rippen, die deshalb leicht abbrechen.

Diese nachteiligen Erscheinungen treten bei den erfindungsgemäßen Verbundwerkstoffen mit abgebautem Polypropylen nicht auf.

## Patentansprüche

1. Flächiger Verbundwerkstoff aus niedermolekularem Polypropylen und einer oder mehreren Glasfasermatten, dadurch gekennzeichnet, daß das Polypropylen eine enge Molmassenverteilung entsprechend einer Schmelzenachgiebigkeit $J_e°$ zwischen $0{,}4 \cdot 10^{-4}$ und $4{,}0 \cdot 10^{-4}$ $[Pa^{-1}]$ bei einer Temperatur von 190°C aufweist.

2. Flächiger Verbundwerkstoff nach Anspruch 1, dadurch gekennzeichnet, daß das Polypropylen bei einer Temperatur von 190°C eine Schmelzeviskosität $\eta_1$ zwischen 80 und 500 $[Pa.s]$ bei einer Schergeschwindigkeit von $10^{-1}$ $[s^{-1}]$ und $\eta_2$ zwischen 40 und 100 $[Pa.s]$ bei einer Schergeschwindigkeit von $10^3[s^{-1}]$ aufweist.

## Claims

1. A sheetlike composite from low molecular weight ploypropylene and one or more glass fiber mats, wherein the polypropylene has a narrow molecular weight distribution corresponding to a melt conformability $J_e^0$ of from $0{.}4 \times 10^{-4}$ to $4{.}0 \times 10^{-4}$ $[Pa^{-1}]$ at 190°C.

2. A sheetlike composite as claimed in claim 1, wherein the polypropylene has at 190°C a melt viscosity $\eta_1$ of from 80 to 500 $[Pa.s]$ at a shear rate of $10^{-1}$ $[s^{-1}]$ and $\eta_2$ of from 40 to 100 $[Pa.s]$ at a shear rate of $10^3[s^{-1}]$.

## Revendications

1. Matériau composite plat en polypropylène de bas poids moléculaire avec un ou plusieurs mats de fibres de verre, caractérisé en ce que le polypropylène possède une répartition étroite des poids moléculaires, correspondant à une flexibilité $J_e^0$ de la masse fondue comprise entre $0{,}4.10^{-4}$ et $4{,}0.10^{-4}$ $[Pa^{-1}]$ à la température de 190°C.

2. Matériau composite plat suivant la revendication 1, caractérisé en ce que le polypropylène possède à 190°C une viscosité à l'état fondu $\eta_1$ entre 80 et 500 $[Pa.s]$ pour une vitesse de cisaillement de $10^{-1}$ $[s^{-1}]$ et $\eta_2$ entre 40 et 100 $[Pa.s]$ pour une vitesse de cisaillement de $10^3$ $[s^{-1}]$.